# EUROPÄISCHE PATENTANMELDUNG

(11) **EP 4 807 694 A1**
(43) Veröffentlichungstag der Anmeldung: **16.09.2026**
(21) Anmeldenummer: 25162803.8
(22) Anmeldetag: 11.03.2025
(51) Int. Cl.: G06V 20/56

(54) **IDENTIFIKATION RELEVANTER SITUATIONEN IN EINER SENSORDATENAUFZEICHNUNG EINER FAHRZEUGFAHRT ZUR STIMULATION EINES PRÜFLINGS MIT SYNTHETISCHEN SENSORDATEN**

(71) Anmelder: dSPACE SE & Co. KG, 33102 Paderborn (DE)
(72) Erfinder: Grotenhöfer, Steffen, 33102 Paderborn (DE)

(57) **Zusammenfassung**

Computerimplementiertes Verfahren zur Stimulation eines Prüflings mit synthetischen Sensordaten, die synthetischen Sensordaten ausgestaltet zur Imitation von Sensordaten eines in einem Fahrzeug verbauten bildgebenden Sensors. Das Verfahren umfasst:
- eine Festlegung eines Satzes charakteristischer Ereignisse zur Identifikation relevanter Situationen in einer Sensordatenaufzeichnung einer Fahrzeugfahrt und eine Festlegung eines Satzes relevanter Variablen der Fahrzeugfahrt;
- eine Beschreibung einer Referenzsituation anhand einer Anzahl von Referenzzeitreihen, von denen jede einen zeitlichen Verlauf einer relevanten Variablen beschreibt;
- eine Suche nach charakteristischen Ereignissen in der Sensordatenaufzeichnung und, anhand der Suche, eine Identifikation relevanter Situationen in der Sensordatenaufzeichnung.

Für jede identifizierte relevante Situation wird zur Beschreibung der jeweiligen relevanten Situation eine Anzahl von Zeitreihen erstellt, von denen jede einen zeitlichen Verlauf einer relevanten Variablen in der Sensordatenaufzeichnung in zeitlicher Nähe zur jeweiligen relevanten Situation beschreibt. Durch Berechnung einer quantitativen Ähnlichkeit jeder Zeitreihe mit der entsprechenden Referenzzeitreihe wird ein der jeweiligen relevanten Situation zugeordneter Ähnlichkeitsvektor berechnet. Eine Anzahl von Ähnlichkeitsvektoren aus einem Cluster von Ähnlichkeitsvektoren in einem Ähnlichkeits-Koordinatensystem wird als Häufung zueinander ähnlicher relevanter Situationen identifiziert. Eine relevante Situation aus der Häufung wird als Testsituation ausgewählt, um auf Basis der Testsituation die synthetischen Sensordaten zu erzeugen und den Prüfling mit den synthetischen Sensordaten zu stimulieren.

## Beschreibung

Datenlogger zum Mitschneiden von Bilddaten bildgebender Sensoren in Fahrzeugen haben in jüngerer Zeit in der Automobilindustrie an Bedeutung gewonnen. Im Zuge der fortschreitenden Automatisierung werden Fahrzeuge mit bildgebenden Sensoren ausgestattet, beispielsweise Kamera-, RADAR-, LIDAR- oder Ultraschallsensoren, sowie mit Steuergeräten zur Auswertung der von den besagten Sensoren erzeugten Bilddaten. Diese Steuergeräte erfüllen im Regelfall sicherheitskritische Aufgaben und können im Bedarfsfall eigenständig in die Steuerung des Fahrzeugs eingreifen (Automatisierungsstufe 2) oder sogar die Steuerung zumindest vorübergehend vollständig übernehmen (Automatisierungsstufe 3, 4 oder 5). Sie benötigen deshalb vor ihrem Feldeinsatz eine aufwendige Evaluierung.

Dafür ist es im Stand der Technik bekannt, während einer Testfahrt eines mit einem bildgebenden Sensor ausgestatteten Testfahrzeugs die von dem Sensor erzeugten Bilddaten auf einer Aufzeichnungsvorrichtung, d.h. einem Datenlogger, aufzuzeichnen. Auf Basis der aufgezeichneten Bilddaten werden dann zu einem späteren Zeitpunkt synthetische Sensordaten erzeugt und mit den synthetischen Sensordaten ein in Entwicklung befindlicher Computeralgorithmus stimuliert. Der Algorithmus ist dabei eine Fahrzeugsteuerungsroutine, vorgesehen und ausgestaltet, um, eingerichtet auf einem Steuergerät zur Ansteuerung eines automatisierten Fahrzeugs, Bilddaten von einem bildgebenden Sensor einzulesen und zu verwerten. Die synthetischen Sensordaten sind zur Imitation der Bilddaten von dem bildgebenden Sensor ausgestaltet, sodass die synthetischen Sensordaten anstelle der echten Bilddaten von dem Algorithmus einlesbar und verwertbar sind, um zu prüfen, inwiefern der Algorithmus die von den synthetischen Sensordaten dargestellten Verkehrssituationen korrekt einschätzt und den Verkehrssituationen angemessene Signale bzw. Steuerbefehle generiert.

Allgemein sind unter synthetischen Sensordaten im Rahmen der vorliegenden Offenbarung der Erfindung Bilddaten zu verstehen, die geeignet sind, von einem zur Einlesung und Verwertung eines Bilddatenstroms ausgestalteten Prüflings eingelesen zu werden und dabei dem Prüfling die Illusion zu vermitteln, von einem bildgebenden Sensor in Echtzeit mit den Bilddaten bespeist zu werden. Beispielsweise können die aufgezeichneten Bilddaten unmittelbar zur testweisen Stimulation des Algorithmus verwendet werden ("Data Replay"). Die Bilddaten können auch zum Training oder zum Test eines neuronalen Netzes verwendet werden, das vorgesehen ist, die Bilddaten auszuwerten, beispielsweise für den Algorithmus eine Objektliste von in den Bilddaten erkennbaren Objekten zu erstellen. Die Bilddaten können auch in ein virtuelles Szenario übersetzt werden, das eine in den Bilddaten dargestellte Verkehrssituation als Computersimulation nachstellt, um mittels einer Sensorsimulation die synthetischen Sensordaten auf Basis des virtuellen Szenarios zu erzeugen und den Algorithmus bzw. das Steuergerät gefahrlos in einer virtuellen Umwelt zu testen (*Software in the Loop* bzw. *Hardware in the Loop*) oder ein neuronales Netz in einer virtuellen Umwelt zu trainieren.

Im Regelfall ist nur ein kleiner Anteil einer derart angefertigten Sensoraufzeichnung für die Evaluierung bzw. das Training eines Prüflings interessant. Interessant können vor allem Aufzeichnungen von Fahrtensituationen sein, in denen eine Reaktion der Fahrzeugsteuerungsroutine notwendig war bzw. erwünscht gewesen wäre, nicht aber der normale Fahrbetrieb, der naturgemäß im Normalfall den überwiegenden Teil einer Fahrzeugfahrt zur Anfertigung einer Sensordatenaufzeichnung ausmacht. Um überhaupt eine verwertbare Anzahl interessanter Fahrsituationen aufzuzeichnen, umfasst eine Sensordatenaufzeichnung oftmals viele Fahrstunden und einige Terabyte an Daten. Im Stand der Technik sind Verfahren bekannt, um die Suche nach aufgenommenen Situationen, die für die Weiterentwicklung eines Fahrzeugsteuersystems interessant sind, in einer derart großen Datenmenge zu automatisieren. Bekannt ist beispielsweise, in der Sensordatenaufzeichnung nach vordefinierten Mustern zu suchen, die für eine bestimmte interessante Fahrsituation, beispielsweise ein Überholmanöver oder ein Bremsmanöver, charakteristisch sind. Auf diese Weise werden aber nur Situationen gefunden, nach denen ausdrücklich gesucht wird. Aufgezeichnete Situationen, die wichtig sind, aber nicht bedacht wurden, bleiben unentdeckt. Zudem ist die Vorgehensweise anfällig für falsche Negative.

Die Druckschrift "Towards Trace-Graphs for Data-driven Test Case Mining in the Domain of Automated Driving" (Noah Metzger et al., 2021 IEEE International Conference on Artificial Intelligence Testing) beschreibt einen Ansatz zur Auffindung unentdeckter Situationen in einer Sensordatenaufzeichnung einer Fahrzeugfahrt. Dazu wird die Testfahrt anhand einer Anzahl relevanter Variablen beschrieben und eine Referenzsituation als Phasenraumverlauf in einem diskretisierten Phasenraum beschrieben. Anschließend wird nach Situationen gesucht, die in der gleichen Phasenraumdarstellung zumindest teilweise einen mit der Referenzsituation übereinstimmenden Verlauf haben.

Dieser Ansatz ermöglicht die Entdeckung vorher nicht bedachter Situationen, nach denen nicht explizit gesucht wurde. Allerdings wegen der Vorgabe eines teilweise übereinstimmenden Phasenraumverlaufs nur eingeschränkt. Situationen, die keine Übereinstimmung mit der Referenzsituation aufweisen, können anhand dieses Ansatzes nicht erkannt werden.

Vor diesem Hintergrund ist es die Aufgabe der Erfindung, die automatische Suche nach unterschiedlichen, potenziell interessanten Situationen in einer Sensordatenaufzeichnung einer Fahrzeugfahrt effektiver zu gestalten, um die Bereitstellung synthetischer Sensordaten zur Stimulation eines Prüflings zu vereinfachen.

Die erfindungsgemäße Lösung der Aufgabe ist ein computerimplementiertes Verfahren zur Stimulation eines Prüflings mit synthetischen Sensordaten, die zur Imitation von Sensordaten eines in einem Fahrzeug verbauten bildgebenden Sensors ausgestaltet sind. Unter einem Prüfling ist im Rahmen der vorliegenden Offenbarung der Erfindung ein beliebiges in Entwicklung befindliches Fahrzeugsteuersystem oder eine beliebige Subkomponente davon zu verstehen, das bzw. die zu Evaluierungs-, Test- oder Trainingszwecken mit synthetischen Sensordaten stimuliert wird. Unter einem bildgebenden Sensor ist ein Sensor zu verstehen, dessen ausgegebene Sensordaten eine berührungslose Erkennung von Objekten oder Oberflächen in der Umgebung des Sensors ermöglichen, insbesondere eine Kamera, ein Radarsensor (Radio Detection and Ranging Sensor), ein Lidarsensor (Light Detection and Ranging Sensor) oder ein Ultraschallsensor.

Das Verfahren umfasst eine Festlegung eines Satzes charakteristischer Ereignisse zur Identifikation relevanter Situationen in einer Sensordatenaufzeichnung einer Fahrzeugfahrt. Ein charakteristisches Ereignis ist ein während der Fahrzeugfahrt aufgetretenes und in der Sensordatenaufzeichnung nachvollziehbares Ereignis, das eine Identifikation eines Ausschnitts der Sensordatenaufzeichnung als relevante Situation bewirkt. Die Intervallgrenzen des Ausschnitts sind dabei so gewählt, dass das charakteristische Ereignis bevorzugt innerhalb der Intervallgrenzen, zumindest aber in zeitlicher Nähe des Ausschnitts liegt. Infolge der Identifikation als relevante Situation ist der Ausschnitt für eine nachfolgende Verarbeitung anhand des erfindungsgemäßen Verfahrens vorgemerkt.

Der Satz charakteristischer Ereignisse ist bevorzugt so ausgestaltet, dass er ungewöhnliche Situationen in der Sensordatenaufzeichnung, die für die Erzeugung synthetischer Sensordaten besonders interessant sind, zuverlässig als relevante Situationen markiert, wobei es an dieser Stelle des Verfahrens vorteilhaft ist, falsche Positive großzügig in Kauf zu nehmen. Der Satz charakteristischer Ereignisse kann beispielsweise eines oder mehrere der folgenden Ereignisse umfassen:
Ein Bremsmanöver, insbesondere eines, das besonders stark ist oder nicht zum Streckenverlauf passt. In einer möglichen Ausgestaltung kann beispielsweise ein leichtes Bremsmanöver kurz vor Einfahrt in eine Kurve nicht als charakteristisches Ereignis gewertet werden, ein starkes Bremsmanöver auf gerader Strecke dagegen schon. In einer anderen möglichen Ausgestaltung können aber auch ausdrücklich alle Bremsmanöver als charakteristische Ereignisse festgelegt sein, wobei bewusst in Kauf genommen wird, dass zahlreiche uninteressante Situationen als relevante Situationen identifiziert werden.

Ein Lenkmanöver, insbesondere ein besonders starkes oder ein nicht zum Streckenverlauf passendes Lenkmanöver. Die Erläuterungen zu den möglichen Ausgestaltungen in Bezug auf das Bremsmanöver gelten in analoger Weise auch für das Lenkmanöver.

Ein Schaltvorgang.

Eine Erreichung einer bestimmten Fahrgeschwindigkeit, insbesondere einer nicht zum Streckenverlauf passenden Fahrgeschwindigkeit. So kann zum Beispiel eine niedrige Fahrgeschwindigkeit auf einer Landstraße oder einer Autobahn ein Indikator für dichten Verkehr sein, und eine stark überhöhte Fahrgeschwindigkeit ein Indikator für eine riskante Fahrweise oder für eine Stresssituation.

Ein Fahrerverhalten, erfasst von einer Fahrerüberwachungssystem zur Beobachtung des Fahrzeugführers, beispielsweise eine Schreckreaktion, eine erkannte Unaufmerksamkeit oder Abgelenktheit, ein besonders lange auf einem Punkt ruhender Blick oder ein besonders schnell umherwandernder Blick.

Ein Erscheinen eines Umweltelements, beispielsweise eines Verkehrsteilnehmers oder eines Hindernisses, im Sichtfeld eines an der Sensordatenaufzeichnung beteiligten Sensors.

Eine Hinzufügung eines Objekts in einer von einem an der Sensordatenaufzeichnung beteiligten Sensor geführten Objektliste.

Ein Steuersignal zur Ansteuerung des Fahrzeugs, veranlasst von einem an der Sensordatenaufzeichnung beteiligten Sensor oder von einem Fahrassistenzsystem des Fahrzeugs, mit dem die Fahrzeugfahrt durchgeführt wurde (im Folgenden: Aufzeichnungsfahrzeug), beispielsweise ein Steuersignal zur Auslösung eines automatischen Bremsmanövers, eines automatischen Lenkmanövers, eines Notrufs oder eines Warnsignals.

Ein Zeitpunkt der Fahrzeugfahrt, bzw. ein an dem Zeitpunkt gegenwärtiges Ereignis, kann auch durch ein manuell erzeugtes dediziertes Signal als charakteristisches Ereignis markiert werden, entweder während der Fahrzeugfahrt oder nachträglich bei einer Sichtung der Sensordatenaufzeichnung.

Das Verfahren umfasst weiterhin eine Festlegung eines Satzes relevanter Variablen der Fahrzeugfahrt. Die relevanten Variablen sind aus der Sensordatenaufzeichnung auslesbare Variablen zur Beschreibung der relevanten Situationen. Mögliche Beispiele für relevante Variablen sind: Geschwindigkeit des Aufzeichnungsfahrzeugs, Geschwindigkeiten zumindest eines weiteren Fahrzeugs in der Umgebung des Aufzeichnungsfahrzeugs (im Folgenden: Fremdfahrzeugs), Fahrbahnquerposition des Aufzeichnungsfahrzeugs, Fahrbahnquerposition zumindest eines Fremdfahrzeugs, Lenkwinkel und relative Fahrbahnlängsposition zumindest eines Fremdfahrzeugs.

Das Verfahren umfasst eine Beschreibung einer Referenzsituation anhand einer Anzahl von Referenzzeitreihen. Jede Referenzzeitreihe beschreibt einen zeitlichen Verlauf einer relevanten Variablen aus dem Satz relevanter Variablen. Der zeitliche Verlauf jeder relevanten Variablen in der Referenzsituation kann aus der Sensordatenaufzeichnung ausgelesen sein, sodass die Referenzsituation in ihrer Gesamtheit eine in der Sensordatenaufzeichnung aufgezeichnete Situation beschreibt, beispielsweise eine der relevanten Situationen. Das ist aber nicht zwingend der Fall. Die Referenzsituation kann beispielsweise auch aus einer anderen Sensordatenaufzeichnung ausgelesen sein. Die Referenzsituation kann sogar künstlich erstellt sein, derart, dass jeder zeitliche Verlauf einen künstlich erstellten zeitlichen Verlauf der jeweiligen relevanten Variablen beschreibt, der aus keiner real durchgeführten Messung ausgelesen ist. Vorzugsweise beschreibt die Referenzsituation aber wenigstens eine realistische Fahrsituation, wie sie in einer realen Fahrzeugfahrt auftreten kann.

Das Verfahren umfasst eine Suche nach charakteristischen Ereignissen aus dem Satz charakteristischer Ereignisse in der Sensordatenaufzeichnung und, anhand der Suche, eine Identifikation einer Anzahl relevanter Situationen in der Sensordatenaufzeichnung. Je nach Ausgestaltung der Sensordatenaufzeichnung kann dafür eine Analyse der Sensordatenaufzeichnung notwendig sein, insbesondere dann, wenn der Verarbeitungsgrad der aufgezeichneten Sensordaten niedrig ist. Sensordaten mit einem niedrigen Verarbeitungsgrad sind zum Beispiel Sensorrohdaten oder vorverarbeitete Sensorrohdaten. Für eine derartige Analyse sind Anwendungen von Methoden der künstlichen Intelligenz und/oder zur Sensorfusion vorteilhaft, wie sie im Stand der Technik zur Auswertung von niedrig verarbeiteten Sensorbilddaten bereits angewendet werden, beispielsweise in Form von neuronalen Netzen zur Objekterkennung. Weiterhin vorteilhaft ist es, für die Suche nach charakteristischen Ereignissen bereits Zeitreihen der relevanten Variablen aus der Sensordatenaufzeichnung zu extrahieren, da diese zur Durchführung eines späteren Verfahrensschritts ohnehin benötigt werden. In diesen Zeitreihen sind bestimmte charakteristische Ereignisse wie z.B. Bremsmanöver leicht erkennbar. Zur Extraktion und Anfertigung der Zeitreihen kann bei Bedarf wiederum künstliche Intelligenz eingesetzt werden. Wenn die Sensordatenaufzeichnung hochverarbeitete Bilddaten umfasst, z.B. eine Objektliste, kann diese Notwendigkeit entfallen, weil die Zeitreihen leicht auslesbar sind. Es ist alternativ oder ergänzend aber auch möglich, die Sensordatenaufzeichnung während der Fahrzeugfahrt mit komplementären quantitativen Daten anzureichern, die die Anfertigung der Zeitreihen bzw. die Erkennung charakteristischer Ereignisse in der Sensordatenaufzeichnung erleichtern. Beispiele für quantitative Daten als Teil der Sensordatenaufzeichnung sind Messdaten, wie Fahrzeuggeschwindigkeit, der aktuell eingelegte Gang oder relative Positionen von Fremdfahrzeugen, oder von einer Signalleitung des Aufzeichnungsfahrzeugs ausgelesene Steuerdaten zur Ansteuerung einer Aktorik des Aufzeichnungsfahrzeugs. Die Analyse der Sensordatenaufzeichnung umfasst in dieser Ausgestaltung eine Analyse der quantitativen Daten.

Alternativ oder ergänzend zu einer Analyse der Sensordatenaufzeichnung kann auch schon während der Fahrzeugfahrt eine Überwachung der Fahrzeugfahrt nach charakteristischen Ereignissen stattfinden, wobei infolge einer Erkennung eines charakteristischen Ereignisses während der Fahrzeugfahrt jeweils eine Markierung in der Sensordatenaufzeichnung hinterlegt wird. Eine Markierung ist eine spezifische Datenstruktur, anhand derer bei einer späteren Auslesung der Sensordatenaufzeichnung der Zeitpunkt eines charakteristischen Ereignisses erkennbar ist, beispielsweise ein digitaler Zeitstempel oder ein in den Bilddatenstrom integriertes spezifisches Datenmuster. Diese Ausgestaltung ist insofern vorteilhaft, dass bestimmte charakteristische Ereignisse mittels geeigneter Sensorik während der Fahrzeugfahrt leicht und zuverlässig erkennbar sind. Die spätere Suche nach charakteristischen Ereignissen in der Sensordatenaufzeichnung beschränkt sich dann auf eine Suche nach Markierungen in der Sensordatenaufzeichnung, ist also wesentlich vereinfacht.

Das Verfahren umfasst eine Beschreibung jeder in der Sensordatenaufzeichnung identifizierten relevanten Situation durch Erstellung einer Anzahl von der jeweiligen relevanten Situation zugeordneten Zeitreihen. Jede Zeitreihe beschreibt einen zeitlichen Verlauf einer relevanten Variablen in der Sensordatenaufzeichnung innerhalb eines in zeitlicher Nähe zu der relevanten Situation angesiedelten Zeitintervalls beschreibt. Durch Berechnung einer quantitativen Ähnlichkeit jeder Zeitreihe mit der jeweils entsprechenden Referenzzeitreihe, die den zeitlichen Verlauf der jeweils selben relevanten Variablen beschreibt, wird ein der jeweiligen relevanten Situation zugeordneter Ähnlichkeitsvektor berechnet, in dem die für die im Zusammenhang der jeweiligen relevanten Situationen berechneten quantitativen Ähnlichkeiten aufgelistet sind. Eine quantitative Ähnlichkeit kann insbesondere anhand einer Korrelation ermittelt werden. Besonders vorteilhaft wird ein zeitinvariantes Verfahren zur Ermittlung eines mathematischen Ähnlichkeitsmaßes verwendet, z.B. das Verfahren "Dynamic Time Warping", damit zwei gleichartige Fahrmanöver, die sich hauptsächlich in ihrer Dauer unterscheiden, als zueinander ähnlich erkannt werden.

Nach Abschluss des vorgenannten Verfahrensschritts ist also für jede relevante Situation ein der jeweiligen relevanten Situation zugeordneter Ähnlichkeitsvektor erstellt. Die Ähnlichkeitsvektoren lassen sich in ein Ähnlichkeits-Koordinatensystem eintragen. In dem Ähnlichkeits-Koordinatensystem bilden die Ähnlichkeitsvektoren von zueinander ähnlichen relevanten Situationen lokale Häufungen bzw. Cluster aus, weil zueinander ähnliche Verkehrssituationen, die in qualitativer Hinsicht gleichartig verlaufen und nur geringfügige quantitative Abweichungen zueinander aufweisen, in Bezug auf jede Zeitreihe eine annähernd konstante Ähnlichkeit zur jeweiligen Referenzzeitreihe aufweisen.

Jede relevante Situation, die auf gleichartige Weise mehrfach in der Sensordatenaufzeichnung festgehalten ist (die natürlich nicht unbedingt aus einer einzigen, ununterbrochenen Aufzeichnungsfahrt erstellt sein muss, sondern auch Aufzeichnungen von mehreren Aufzeichnungsfahrten umfassen kann), kann in dem Ähnlichkeits-Koordinatensystem ein Cluster ausbilden. Ein Anwender, der an Situationen mit einem bestimmten Verlauf interessiert ist, kann mittels eines geeigneten Visualisierungs- und Auswahlwerkzeugs in einer Anwendersoftware, die lokale Häufung identifizieren, die die entsprechenden Situationen aus der Sensordatenaufzeichnung enthält, alle in der entsprechenden lokalen Häufung enthaltenen Fahrtsituationen auswählen, sie mit einer passenden Kategorisierung versehen speichern und als Datenbasis zur Erzeugung der synthetischen Sensordaten nutzen. Dem Anwender steht auf diese Weise eine Vielzahl relevanter Situationen zur Verfügung. Aus einer Anzahl gespeicherter relevanter Situationen, die einer Häufung zueinander ähnlicher relevanter Situationen angehören, kann er eine oder mehrere relevante Situationen als Testsituationen zur Evaluierung oder zum Training des Prüflings auswählen, auf Basis der Testsituation die synthetischen Sensordaten erzeugen und den Prüfling mit den synthetischen Sensordaten stimulieren.

Auf diese Weise verbessert die Erfindung die Testtiefe bzw. die Trainingsqualität bei der Stimulation von Prüflingen mit synthetischen Sensordaten, die auf Basis einer Sensordatenaufzeichnung angefertigt werden, durch eine Verbesserung der Datenausbeute. Die synthetischen Sensordaten können unmittelbar aus der Sensordatenaufzeichnung ausgelesen und der Prüfling mit den ausgelesenen Sensordaten stimuliert werden ("Data Replay"). Alternativ kann die Testsituation auch als virtuelle Verkehrssituation nachgebaut werden. Dafür muss die virtuelle Verkehrssituation zur Erzeugung der synthetischen Sensordaten mindestens eine Sensorsimulation umfassen, die ausgestaltet ist, die synthetischen Sensordaten zu erzeugen und zur Imitation von Sensordaten eines bildgebenden Sensors auszugestalten, der in einem sich in der virtuellen Verkehrssituation bewegenden Fahrzeug verbaut ist.

Es ist im Rahmen der Erfindung nicht ausgeschlossen, dass zwei oder mehr unterschiedliche Häufungen zueinander ähnlicher Situationen sich im Ähnlichkeits-Koordinatensystem zufällig räumlich überlappen und auf diese Weise gemeinsam ein lokales Cluster ausbilden, das zueinander unähnliche Situationen umfasst. Um derartige inhomogene Cluster zu erkennen, ist es vorteilhaft, innerhalb eines Clusters eine weitere Ähnlichkeitsprüfung durchzuführen, und zwar durch eine Auswahl einer relevanten Situation aus dem Cluster von Ähnlichkeitsvektoren als Häufungsreferenzsituation. Anschließend erfolgt für jede weitere relevante Situation aus dem Cluster von Ähnlichkeitsvektoren eine Berechnung einer quantitativen Ähnlichkeit jeder Zeitreihe der jeweiligen relevanten Situation mit derjenigen Zeitreihe der Häufungsreferenzsituation, die den zeitlichen Verlauf derselben relevanten Situation beschreibt wie die jeweilige Zeitreihe. Das Vorgehen dabei ist analog zu der zuvor beschriebenen Berechnung der quantitativen Ähnlichkeit mit der Referenzsituation, nur beschränkt auf das jeweilige Cluster, wobei die Häufungsreferenzsituation die Rolle der Referenzsituation übernimmt. Die jeweilige relevante Situation wird als ähnlich zur Häufungsreferenzsituation bewertet, wenn die quantitative Ähnlichkeit jeder Zeitreihe der relevanten Situation hinreichend hoch ist, insbesondere einen vorgegebenen Schwellwert überschreitet. Die Häufungsreferenzsituation und alle zur Häufungsreferenzsituation ähnlichen relevanten Situationen des Clusters werden als Häufung zueinander ähnlicher relevanter Situationen identifiziert.

Die Häufung zueinander ähnlicher Situationen bildet dann, wenn das Cluster zueinander unähnliche Situationen umfasst, also eine Untermenge des Clusters aus, die ausschließlich die relevanten Situationen umfasst, die ähnlich zur Häufungsreferenzsituation sind. Anschließend kann eine nicht zur Untermenge gehörende Situation als neue Häufungsreferenzsituation ausgewählt und der Vorgang mit den verbleibenden Situationen des Clusters wiederholt werden, um inkrementell alle in dem Cluster enthaltenen Häufungen zueinander ähnlicher relevanter Situationen zu identifizieren.

Die Zeichnungen und deren nachfolgende Beschreibung skizzieren eine beispielhafte Ausgestaltung der Erfindung. Es zeigen
- Figur 1: eine relevante Situation während einer Fahrzeugfahrt zur Anfertigung einer Sensordatenaufzeichnung;
- Figur 2: die Sensordatenaufzeichnung;
- Figur 3: eine anhand der Sensordatenaufzeichnung erstellte Objektlistensequenz;
- Figur 4: einen Satz von Referenzzeitreihen einer Referenzsituation;
- Figur 5: eine weitere relevante Situation der Fahrzeugfahrt;
- Figur 6: einen Satz von Zeitreihen zur Beschreibung der weiteren relevanten Situation;
- Figur 7: ein Ähnlichkeitskoordinatensystem;
- Figur 8: eine grafische Benutzerschnittstelle zur Identifizierung lokaler Häufungen in dem Ähnlichkeitskoordinatensystem und deren Speicherung in einer Datenbank; und
- Figur 9: ein Computersystem zur Stimulation eines Prüflings mit synthetischen Sensordaten.

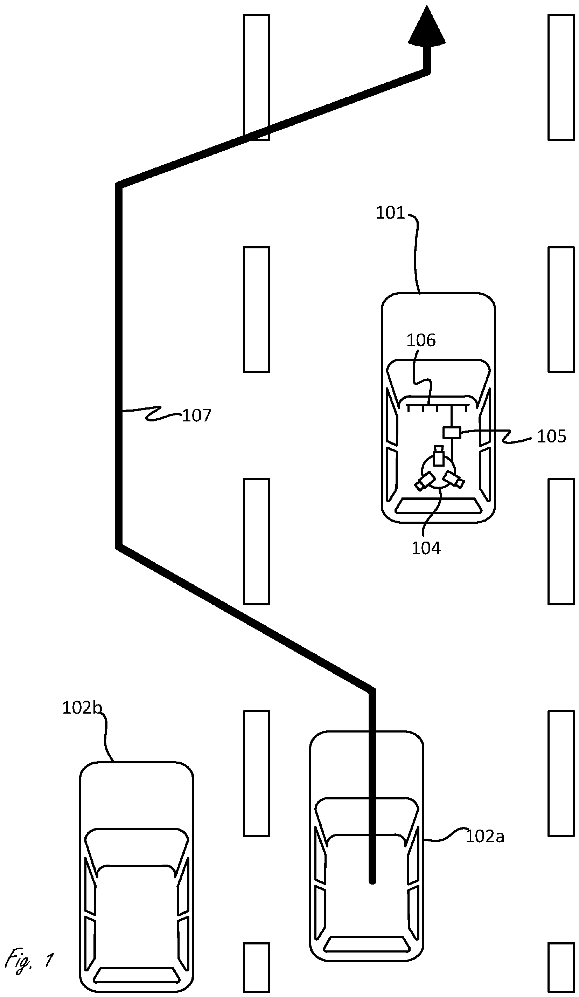

Die Abbildung der Figur 1 zeigt ein Aufzeichnungsfahrzeug 101 bei der Durchführung einer Fahrzeugfahrt in einer Straßenverkehrsumgebung, die in der dargestellten Momentaufnahme neben dem Aufzeichnungsfahrzeug 101 noch ein erstes Fremdfahrzeug 102a und ein zweites Fremdfahrzeug 102b umfasst.

Das Aufzeichnungsfahrzeug 101 ist mit bildgebender Sensorik 104 zur Anfertigung einer Sensordatenaufzeichnung 200 der Fahrzeugfahrt ausgestattet. Die Sensorik 104 umfasst einen oder mehrere bildgebende Sensoren, beispielsweise eine Kamera, eine Stereokamera einen Radar, einen Lidar oder eine beliebige Kombination von mehreren Instanzen der vorgenannten Sensortypen. Jeder der bildgebenden Sensoren aus der Sensorik 104 erzeugt einen kontinuierlichen Datenstrom aus Sensordaten, jeweils ausgestaltet als ein Bilddatenstrom aus Einzelbildern 202 (Frames) der Umgebung des Aufzeichnungsfahrzeugs 101. Das Aufzeichnungsfahrzeug 101 umfasst eine Aufzeichnungsvorrichtung 105, die eingerichtet ist, die von der Sensorik 104 erzeugten Bilddatenströme aufzunehmen und auf einem Speichermedium zu speichern. Die Aufzeichnungsvorrichtung 105 ist außerdem eingerichtet, zur Erleichterung einer späteren Analyse der aufgezeichneten Sensordaten quantitative Daten von einem Datenbus 106 des Aufzeichnungsfahrzeugs 101 einzulesen und auf dem Speichermedium zu speichern. Quantitative Daten sind Daten, die eine skalare oder vektorwertige Größe repräsentieren. Beispiele sind eine Fahrgeschwindigkeit des Aufzeichnungsfahrzeugs 101, ein Lenkwinkel, ein eingelegter Gang oder ein Zustand einer Komponente des Aufzeichnungsfahrzeugs 101.

Die Fahrzeugfahrt dient der Sammlung von Bildsensordaten 201 von der Sensorik 104 zur späteren Stimulation eines Prüflings 901 mit den gesammelten Bildsensordaten 201. Der Prüfling 901 ist ein elektronisches System, das ausgestaltet ist, die Bildsensordaten 201 zu verarbeiten und auf Basis der Bildsensordaten 201 Steuersignale 902 zu generieren. Die Stimulation kann zur Evaluierung des Prüflings 901 vorgesehen sein, um gefahrlos und reproduzierbar zu testen, inwiefern eine Reaktion des Prüflings 901 auf die Bildsensordaten 201 einer vorgesehenen Reaktion entspricht. Die Stimulation kann auch zum Training des Prüflings 901 vorgesehen sein, die Bildsensordaten 201 korrekt zu interpretieren und auf vorgesehene Weise auf die Bildsensordaten 201 zu reagieren. Der Prüfling kann insbesondere ein fortgeschrittenes Fahrassistenzsystem (ADAS, Advanced Driving Assistance System) oder eine beliebige Komponente oder Substruktur desselben sein.

Die Abbildung zeigt beispielhaft eine potentiell interessante Fahrtsituation, charakterisiert durch ein riskantes, vom ersten Fremdfahrzeug 102a durchgeführtes erstes Überholmanöver 107. Naturgemäß besteht die Sensordatenaufzeichnung 200 aber größtenteils aus Aufzeichnungen von Standardsituationen, die für die Stimulation des Prüfling 901 bestenfalls von geringem Wert sind. Um trotzdem eine hinreichend große Menge an interessanten Situationen aufzuzeichnen, umfasst die Sensordatenzeichnung 200 üblicherweise viele Fahrtstunden und dementsprechend eine viele Terabyte große Menge von Sensordaten, von denen nur ein kleiner Anteil für die Stimulation des Prüflings 901 interessant ist.

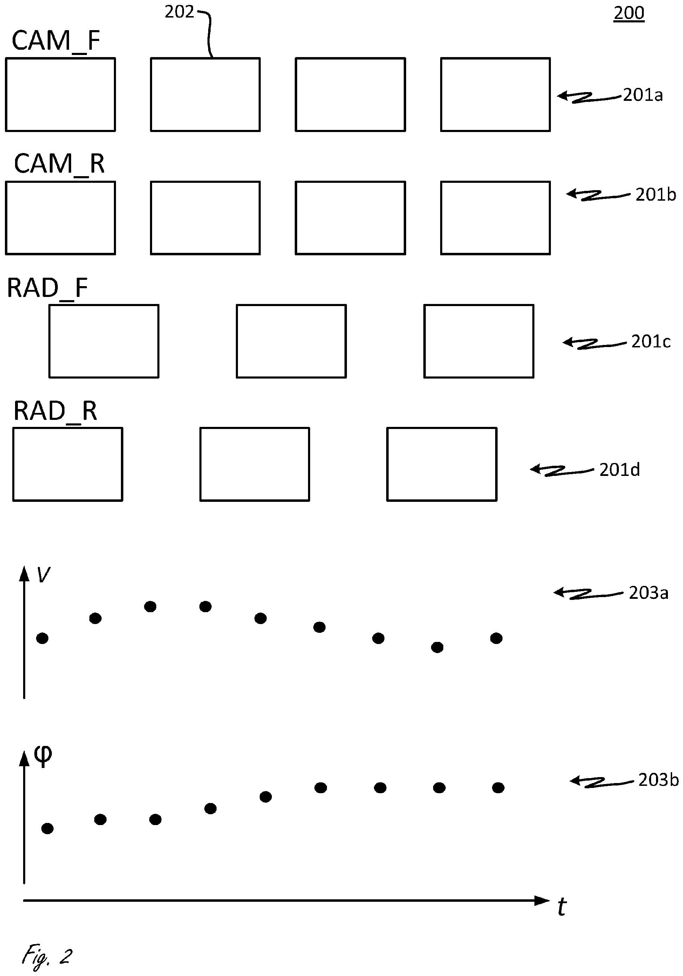

Die Abbildung der Figur 2 skizziert einen zeitlichen Ausschnitt der während der Fahrzeugfahrt angefertigten Sensordatenzeichnung 200. Die Sensordatenaufzeichnung 200 umfasst beispielhaft vier Bilddatenströme 201, jeder davon ausgebildet als eine zeitliche Sequenz von Rohdaten-Einzelbildern 202: einen ersten Bilddatenstrom 201a von einer Frontkamera des Aufzeichnungsfahrzeugs 101, einen zweiten Bilddatenstrom 201b von einer rückwärtigen Kamera des Aufzeichnungsfahrzeugs 101, einen dritten Bilddatenstrom 201c von einem Frontradar des Aufzeichnungsfahrzeugs 101, und einen vierten Bilddatenstrom 201d von einem rückwärtigen Radar des Aufzeichnungsfahrzeugs 101. Die Sensordatenaufzeichnung 200 umfasst beispielhaft außerdem quantitative Daten 203 in Form zweier Messreihen, jeweils ausgestaltet als eine zeitliche Sequenz vom Fahrzeugbus 106 ausgelesener skalarer Messgrößen: eine erste Messreihe 203a für die Geschwindigkeit des Aufzeichnungsfahrzeugs 101 und eine zweite Messreihe 203b für den Lenkwinkel des Aufzeichnungsfahrzeugs 101.

Die Sensordatenaufzeichnung 200 wird nach Abschluss der Fahrzeugfahrt automatisiert analysiert und im Zuge der Analyse nach charakteristischen Ereignissen durchsucht. Da die Bilddatenströme 201 als Rohdaten ausgestaltet sind, ist es vorteilhaft, die Analyse mittels künstlicher Intelligenz (KI) durchzuführen, insbesondere mittels zumindest einer KI, die zur Erstellung einer Objektliste 301 auf Basis eines Einzelbildes 202 oder auf Basis einer Fusion von Einzelbildern 202 zumindest zweier bildgebender Sensoren ausgestaltet ist. Beispielsweise können die Kameraaufnahmen des zweiten Bilddatenstroms 201b verwendet werden, um anhand einer KI zur Objekterkennung in den Einzelbildern 202 des zweiten Bilddatenstroms 201b abgebildete Fremdfahrzeuge 102 zu erkennen. Anhand einer Fusion des zweiten Bilddatenstroms 201b mit den Radaraufnahmen des vierten Bilddatenstroms 201d kann den erkannten Fremdfahrzeugen 102 eine relative Position und eine relative Geschwindigkeit zugeordnet werden. Beide Fremdfahrzeuge können anschließend, mit einem Label, der relativen Position sowie der relativen Geschwindigkeit versehen, einer Objektliste 301 hinzugefügt werden. Durch Wiederholung des Vorgangs für viele Einzelbilder 202 können die Bilddatenströme 201 auf diese Weise in eine Objektlistensequenz 300 konvertiert werden, anhand derer das Verhalten von in den Bilddatenströmen 201 abgebildeten Objekten, z.B. Fremdfahrzeugen 102, in der Umgebung des Aufzeichnungsfahrzeugs 101 unmittelbar nachvollziehbar ist.

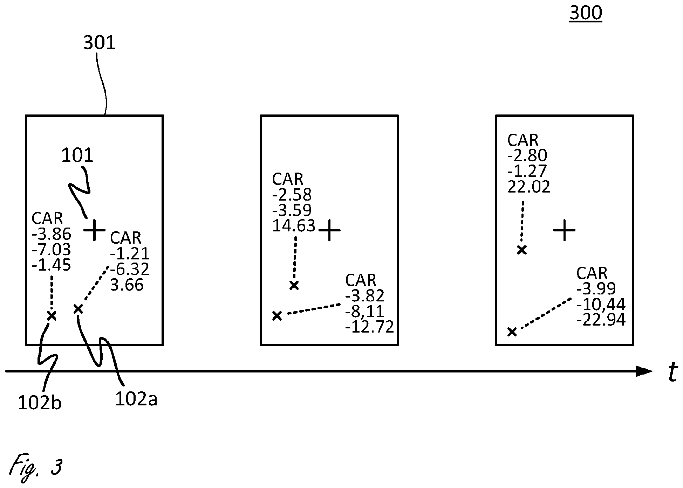

Die Abbildung der Figur 3 zeigt einen zeitlichen Ausschnitt von drei Objektlisten 301 aus einer Objektlistensequenz 300. Die Objektlisten 301 sind anhand der Sensordaten 201 erstellt, die das Aufzeichnungsfahrzeug 101 während der in der Figur 1 dargestellten Situation gesammelt hat. In den Objektlisten 301 sind sowohl das erste Fremdfahrzeug 102a als auch das zweite Fremdfahrzeug 102b als Objekte gelistet. Beiden ist ein Label "CAR" zugeordnet, anhand dessen sie als Personenkraftwagen identifizierbar sind, sowie, jeweils von oben nach unten, eine relative Querposition, eine relative Längsposition und eine relative Geschwindigkeit. In der Objektlistensequenz 300 sind charakteristische Ereignisse leicht erkennbar, insbesondere in Kombination mit den quantitativen Daten 203, anhand derer das Verhalten des Aufzeichnungsfahrzeugs 101 leicht nachvollziehbar ist.

Die Analyse der Sensordatenaufzeichnung 200 zur Identifikation charakteristischer Ereignisse ist alternativ zumindest teilweise auch schon während der Fahrzeugfahrt parallel zur Anfertigung der Sensordatenaufzeichnung 200 durchführbar. Insbesondere sind Mittel zur Echtzeitkonvertierung zumindest eines Bilddatenstroms 201 in eine Objektlistensequenz 300 im Stand der Technik bekannt. Die Objektlistensequenz 300 kann in dieser Ausgestaltung als Teil der Sensordatenaufzeichnung 200 auf der Aufzeichnungsvorrichtung 105 hinterlegt werden.

Ein Satz charakteristischer Ereignisse ist vor Beginn der Analyse festgelegt, und die Analyse umfasst eine systematische Suche nach charakteristischen Ereignissen aus dem Satz charakteristischer Ereignisse in der Sensordatenaufzeichnung 200. Die systematische Suche kann besonders vorteilhaft anhand der Objektlistensequenz 300 und/oder anhand der quantitativen Daten 203 erfolgen. Eine Identifikation eines charakteristischen Ereignisses zu einem gegebenen Zeitpunkt *t*_{ch} in der Sensordatenzeichnung 200 bewirkt, dass der Zeitpunkt *t*_{ch} als relevante Situation vorgemerkt wird. Beispielhaft kann die in der Figur 1 dargestellte Situation infolge eines scharfen Bremsmanövers des zweiten Fremdfahrzeugs 102b, in der Objektlistensequenz 300 leicht erkennbar anhand des starken Geschwindigkeitsabfalls des zweiten Fremdfahrzeugs 102b, als eine erste relevante Situation vorgemerkt werden, wenn ein scharfes Bremsmanöver eines Fremdfahrzeugs 102 Teil des Satzes charakteristischer Ereignisse ist. Eine zur Durchführung der Analyse ausgestaltete Analyseroutine kann in diesem Fall ausgestaltet sein, die Objektlistensequenz 300 nach besonders großen negativen Geschwindigkeitsgradienten von als Fahrzeug gelabelten Objekten zu durchsuchen. Als weiteres Beispiel kann das charakteristische Ereignis aber auch der von dem ersten Fremdfahrzeug 102a durchgeführte Spurwechsel sein.

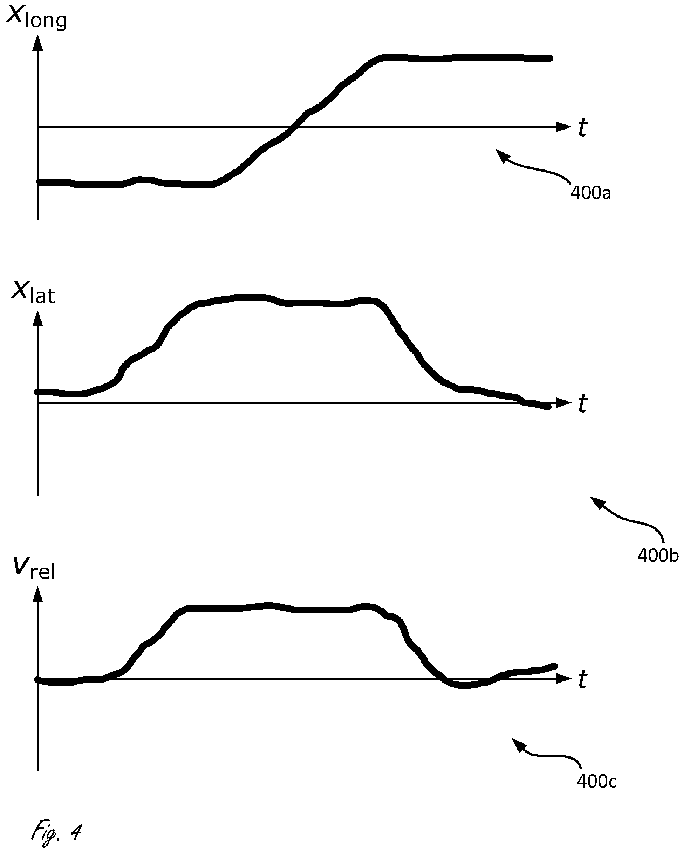

Jede identifizierte relevante Situation wird in eine Anzahl der relevanten Situation zugeordneter Zeitreihen 400 konvertiert, die die jeweilige relevante Situation beschreiben. Die Abbildung der Figur 4 zeigt beispielhaft eine Anzahl von Zeitreihen 400, die zur Beschreibung der in der Figur 1 dargestellten ersten relevanten Situation erstellt wurden, nachdem diese als relevante Situation identifiziert wurde. Eine erste Zeitreihe 400a ist eine Auftragung der relativen Längsposition des ersten Fremdfahrzeugs 102a, eine zweite Zeitreihe 400b ist eine Auftragung der relativen Querposition des ersten Fremdfahrzeugs 102a, und eine dritte Zeitreihe 400c ist eine Auftragung der relativen Geschwindigkeit des ersten Fremdfahrzeugs 102a. Relative Längsposition, relative Querposition und relative Geschwindigkeit bilden einen vorweg festgelegten Satz relevanter Variablen aus, und die Zeitreihen jeder relevanten Situation umfassen jeweils genau eine Zeitreihe für jede relevante Variable, sodass die Zeitreihen zweier beliebiger relevanter Situationen unmittelbar miteinander vergleichbar sind.

Es sei angemerkt, dass der Satz relevanter Variablen auch mehr als nur drei relevante Variablen umfassen kann. Die Beschränkung auf nur drei relevante Variablen in dem dargestellten Beispiel ist allein der besseren Verständlichkeit der Erfindungsidee geschuldet.

Die Beschreibung der ersten relevanten Situation durch Zeitreihen 400, 600 beschränkt sich in diesem Ausführungsbeispiel bewusst auf Variablen des ersten Fremdfahrzeugs 102a. Eine Berücksichtigung mehrerer Fremdfahrzeuge 102 bewirkt eine variable Anzahl von Zeitreihen 400, 600 für unterschiedliche relevante Situationen, je nachdem, wie viele Fremdfahrzeuge 102 sich in der jeweiligen Situation in der Nähe des Aufzeichnungsfahrzeugs 101 befunden haben. Daraus wiederum folgt in den späteren Verfahrensschritten eine uneinheitliche Dimensionalität der Ähnlichkeitsvektoren und eine fehlende unmittelbare Vergleichbarkeit der Zeitreihen 400, 600. Eine isolierte Betrachtung der während einer relevanten Situation im Umfeld des Aufzeichnungsfahrzeugs 101 befindlichen Fremdfahrzeuge 102 vermeidet diese Probleme und ist als Ausgestaltung der Erfindung deshalb bevorzugt. In einer optionalen weiteren Ausgestaltung werden bei Anwesenheit mehrerer Fremdfahrzeuge 102 in einer relevanten Situation individuelle Zeitreihen 400 für zumindest zwei der Fremdfahrzeuge 102 angelegt. In der Situation aus der Figur 1 würde in dieser Ausgestaltung, neben den in der Figur 4 dargestellten Zeitreihen 400, noch ein weiterer Satz analoger Zeitreihen für das zweite Fremdfahrzeug 102b angelegt werden. In einer anderen Ausgestaltung umfasst das Verfahren eine automatische Selektion, um anhand vordefinierter Kriterien aus mehreren Fremdfahrzeugen 102 eine Auswahl zu treffen, für welche Fremdfahrzeuge 102 Zeitreihen 400, 600 angelegt werden. Beispielhaft kann vorgegeben sein, dass Zeitreihen 400, 600 jeweils nur für das Fremdfahrzeug 102 angelegt werden, das in der jeweiligen Situation als Akteur bzw. Auslöser des charakteristischen Ereignisses in Erscheinung getreten ist.

Die durch die abgebildeten Zeitreihen 400 beschriebene erste relevante Situation wird beispielhaft als Referenzsituation festgelegt, und die drei die Situation beschreibenden Zeitreihen 400 als Referenzzeitreihen. Die Ernennung zur Referenzsituation bedeutet, dass jede weitere relevante Situation wie nachfolgend beschrieben mit der Referenzsituation verglichen wird, um quantitative Ähnlichkeiten der Zeitreihen 600 der jeweiligen Situation mit den Zeitreihen 400 der der Referenzsituation zu berechnen.

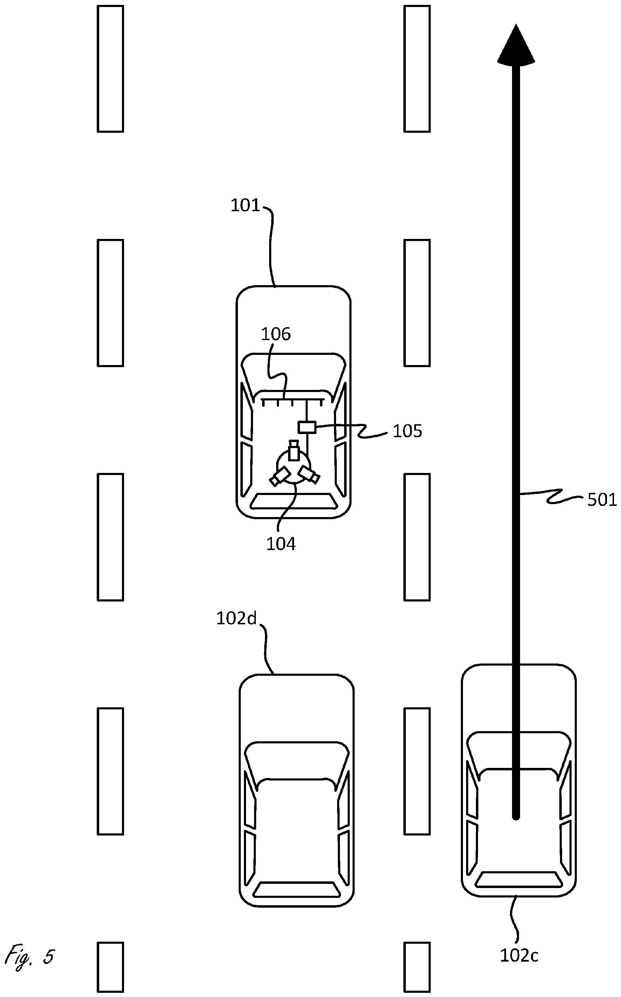

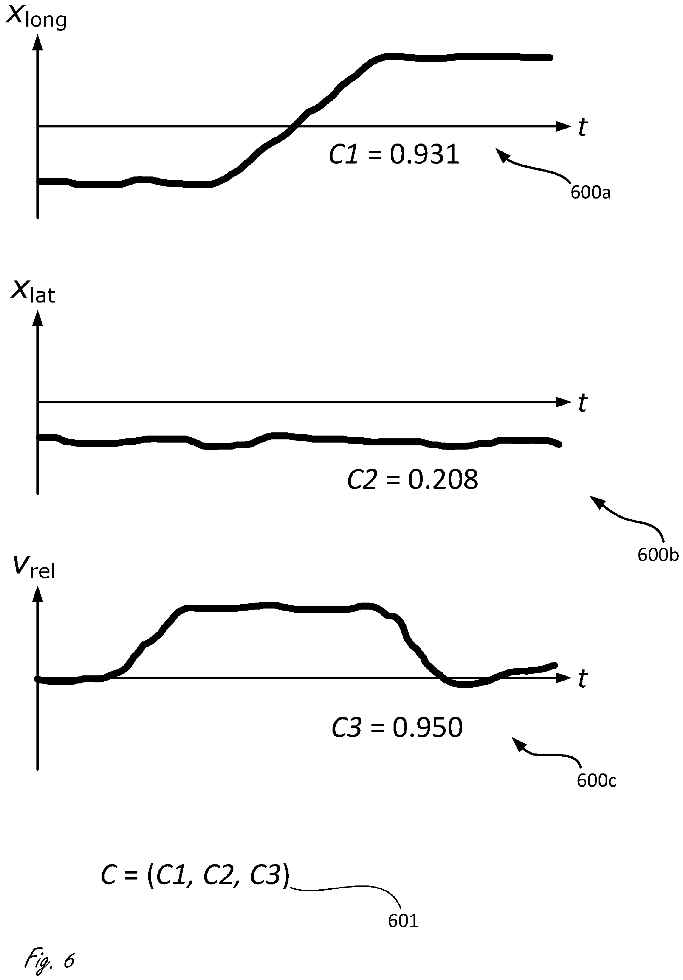

Die Abbildung der Figur 5 skizziert beispielhaft eine zu einem anderen Zeitpunkt der Aufzeichnungsfahrt aufgezeichnete zweite relevante Situation. Ein drittes Fremdfahrzeug 102c wird von einem hinter dem Aufzeichnungsfahrzeug 101 fahrenden vierten Fremdfahrzeug 102d an einem Spurwechsel zur Einleitung eines regelkonformen Überholmanövers gehindert. Nach einer kurzen Warteperiode beschleunigt das dritte Fremdfahrzeug 102c, um ein regelwidriges zweites Überholmanöver 501 rechts am Aufzeichnungsfahrzeug 101 vorbei durchzuführen. Auf gleiche Weise wie die Referenzsituation wird die zweite relevante Situation durch einen der zweiten relevanten Situation zugeordneten Satz von Zeitreihen 600 beschrieben, abgebildet in der Figur 6. Die der zweiten relevanten Situation zugeordneten Zeitreihen 600 beschreiben jeweils einen zeitlichen Verlauf einer Variablen aus dem Satz relevanter Variablen, sodass jede der zweiten relevanten Situation zugeordnete Zeitreihe 600 unmittelbar mit einer Referenzzeitreihe 400 vergleichbar ist. Für jede weitere identifizierte relevante Situation wird auf die gleiche Weise eine Anzahl von Zeitreihen 600 angelegt, die jeweils unmittelbar mit einer Referenzzeitreihe 400 vergleichbar sind.

Für jede der zweiten relevanten Situation zugeordnete Zeitreihe 600 wird anhand einer geeigneten mathematischen Korrelationsfunktion eine quantitative Ähnlichkeit zu der jeweils analogen Referenzzeitreihe 400 berechnet, die den zeitlichen Verlauf derselben relevanten Variablen beschreibt. Die erste Zeitreihe 600a der zweiten relevanten Situation beschreibt den gleichen qualitativen Verlauf wie die erste Referenzzeitreihe 400a und weist deshalb eine hohe quantitative Ähnlichkeit *C1* auf. Die zweite Zeitreihe 600b verläuft, da das dritte Fremdfahrzeug 102c anders als das erste Fremdfahrzeug 102a keinen Spurwechsel durchgeführt hat, qualitativ anders als die zweite Referenzzeitreihe 400b. Die quantitative Ähnlichkeit C2 der zweiten Zeitreihe 600b ist demzufolge klein. Die dritte Zeitreihe 600c weist wieder einen qualitativ gleichartigen Verlauf wie die dritte Referenzzeitreihe 400c auf, ihre quantitative Ähnlichkeit C3 ist demzufolge hoch. Die berechneten quantitativen Ähnlichkeiten werden in einem der zweiten relevanten Situation zugeordneten Ähnlichkeitsvektor 601 zusammengefasst.

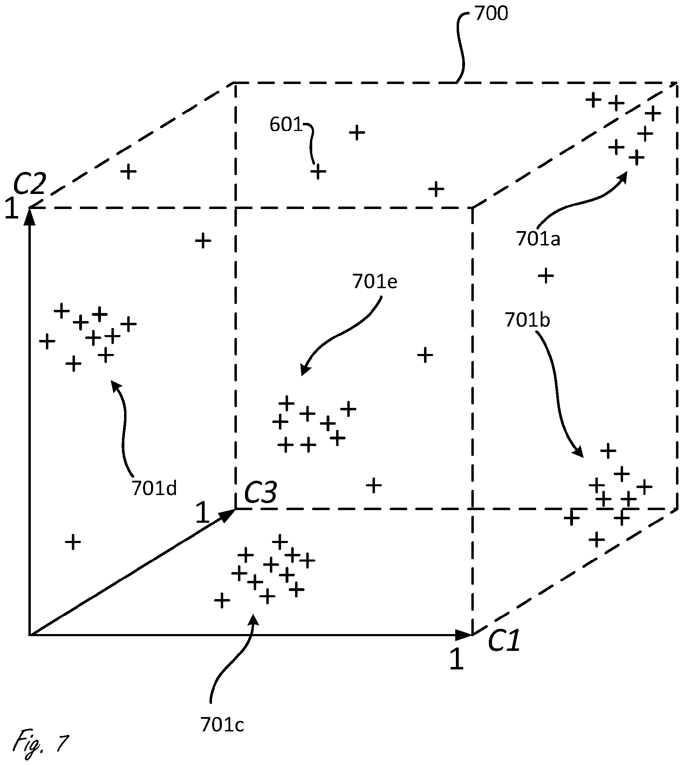

Auf gleiche Weise wie vorhergehend am Beispiel der Figur 6 beschrieben wird für jede relevante Situation ein eigener, der jeweiligen relevanten Situation zugeordneter Ähnlichkeitsvektor 601 berechnet. Die auf diese Weise berechneten Ähnlichkeitsvektoren 601 werden, wie in der Abbildung der Figur 7 gezeigt, in ein Ähnlichkeits-Koordinatensystem 700 eingetragen. Alle relevanten Situationen, die einen qualitativ gleichartigen Verlauf aufweisen wie die in der Figur 1 dargestellte Referenzsituation, haben in Bezug auf jede einzelne Zeitreihe 600 eine hohe Ähnlichkeit mit der jeweiligen Referenzzeitreihe 400 und bilden deshalb einen ersten Cluster 701a von Ähnlichkeitsvektoren 601 in der Umgebung des Vektors (1, 1, 1) aus. Alle relevanten Situationen, die einen qualitativ gleichartigen Verlauf aufweisen wie die in der Figur 5 dargestellte zweite relevante Situation, weisen Zeitreihen auf, deren Verläufe denen der zweiten Relevanten Situation zugeordneten Zeitreihen 600 (Figur 6) in hohem Maße ähneln, wodurch sich auch für jede Zeitreihe eine annähernd gleichwertige quantitative Ähnlichkeit ergibt. Die Situationen, die einen qualitativ gleichartigen Verlauf aufweisen wie die zweite Situation, bilden deshalb einen zweiten Cluster 701b von Ähnlichkeitsvektoren in der Umgebung des Ähnlichkeitsvektors (0,931, 0,208, 0,950) (siehe Figur 6) aus. Auf analoge Weise bilden sich weitere Cluster von anders verlaufenden, jeweils zueinander ähnlichen relevanten Situationen aus, beispielhaft ein dritter Cluster 701c, ein vierter Cluster 701d und ein fünfter Cluster 701e.

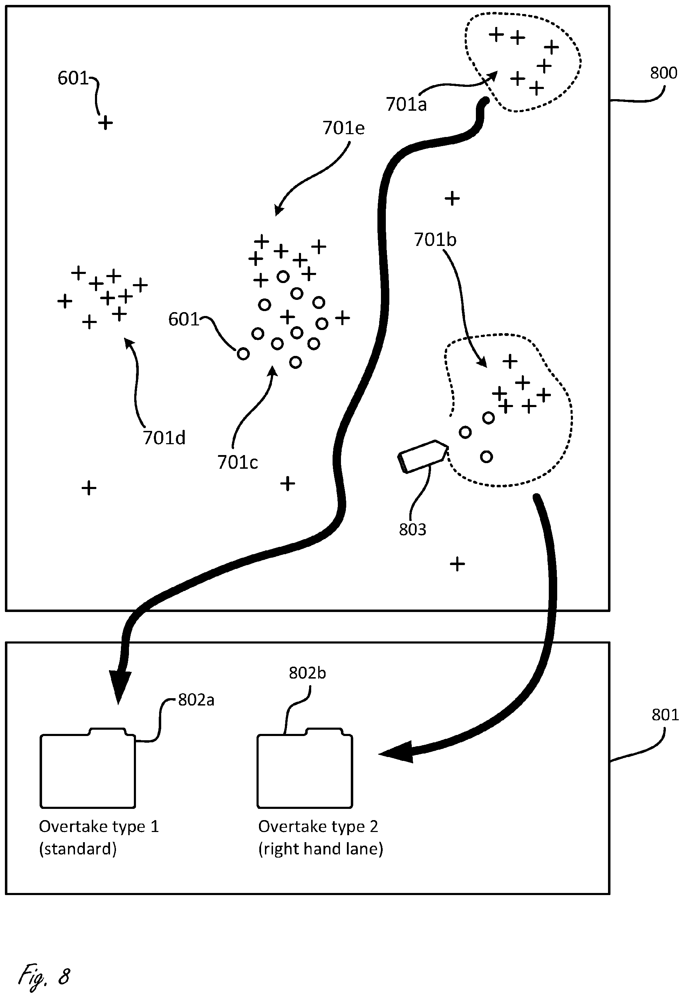

Die Abbildung der Figur 8 zeigt eine mögliche Ausgestaltung einer grafischen Benutzeroberfläche 800 zur Extraktion relevanter Situationen aus der Sensordatenaufzeichnung 200 anhand des Ähnlichkeits-Koordinatensystems 700, und eine Datenbank 801 zur Speicherung der extrahierten relevanten Situationen.

Die grafische Benutzeroberfläche 800 ist ausgestaltet als eine dimensionsreduzierte, zweidimensionale Darstellung des Ähnlichkeits-Koordinatensystems 700 mit den darin eingetragenen Ähnlichkeitsvektoren 601, in der die Cluster 701 als zweidimensionale Cluster aus projizierten Ähnlichkeitsvektoren 601 ausgebildet sind. Jedes der zweidimensionalen Cluster 701 umfasst zumindest eine lokale Häufung von Ähnlichkeitsvektoren 601 zueinander ähnlicher relevanter Situationen. Die grafische Benutzeroberfläche 800 umfasst außerdem ein oder mehrere Mittel zur Identifikation einer Anzahl von Ähnlichkeitsvektoren 601 eines Clusters 701 als Häufung zueinander ähnlicher relevanter Situationen. In dem dargestellten Beispiel umfassen diese Mittel beispielhaft ein von einem Anwender bedienbares Auswahlwerkzeug 803 in Form eines virtuellen Stiftes zur Einkreisung von Clustern 701.

Ein einzelner Cluster 701 kann zwei oder mehr lokale Häufungen zueinander ähnlicher relevanter Situationen umfassen, die allein infolge räumlicher Überlappung ein gemeinsames Cluster 701 ausbilden. Die grafische Benutzeroberfläche 800 umfasst bevorzugt Mittel, derartige räumliche Überlappungen zu erkennen und die unterschiedlichen, in einem Cluster 701 vereinten lokalen Häufungen durch grafische Hervorhebung voneinander zu trennen. In der dimensionsreduzierten Darstellung der grafischen Benutzeroberfläche 800 kann eine solche Überlappung zum einen infolge der Projektion des höherdimensionalen Ähnlichkeits-Koordinatensystems 800 in eine niedrigdimensionale Darstellung auftreten. Eine derartige projektionsinduzierte Überlappung ist in der Figur 8 beispielhaft als Überlappung des dritten Clusters 701c mit dem fünften Cluster 701e dargestellt. Sie ist zum Beispiel anhand einer Prüfung der euklidischen Abstände einzelner Ähnlichkeitsvektoren 601 im Ähnlichkeitskoordinatensystem 700 erkennbar. Die Abbildung zeigt zudem ein Beispiel für eine grafische Hervorhebung, indem die Ähnlichkeitsvektoren des dritten Clusters 701c als Kreise und die Ähnlichkeitsvektoren des fünften Clusters 701e als Kreuze dargestellt sind.

Es können aber auch schon im hochdimensionalen Ähnlichkeits-Koordinatensystem 700 zufällige räumliche Überlappungen von lokalen Häufungen auftreten, nämlich dann, wenn die Sensordatenaufzeichnung 200 zwei relevante Situationen umfasst, für die sich zufällig ein annähernd gleichwertiger Ähnlichkeitsvektor 601 ergibt, obwohl beide relevanten Situationen keine besondere Ähnlichkeit zueinander aufweisen.

Eine derartige zufällige Überlappung ist in der Abbildung beispielhaft für das zweite Cluster 701b dargestellt. Das zweite Cluster 701b wurde in der Abbildung gerade manuell anhand des Auswahlwerkzeugs 803 als Cluster markiert. Dieser Markierungsvorgang löst eine automatische Ähnlichkeitsprüfung aus, um die von dem zweiten Cluster 701b umfassten lokalen Häufungen zu identifizieren und voneinander zu trennen. Im Rahmen dieser Ähnlichkeitsprüfung wird eine von dem zweiten Cluster 701b umfasste relevante Situation, beispielsweise die in der Figur 5 dargestellte Situation, als Häufungsreferenzsituation ausgewählt. Anschließend werden für jede weitere relevante Situation 601 aus dem zweiten Cluster 701b die Zeitreihen 600 des jeweiligen Ähnlichkeitsvektors 601 mit den Zeitreihen der Häufungsreferenzsituation verglichen. Wenn die quantitative Ähnlichkeit jeder Zeitreihe 600 eines Ähnlichkeitsvektors zur entsprechenden Zeitreihe der Häufungsreferenzsituation hinreichend groß ist, also einen vorgegebenen Ähnlichkeits-Schwellwert überschreitet, wird der jeweilige Ähnlichkeitsvektor 601 derselben lokalen Häufung wie die Häufungsreferenzsituation zugeteilt.

Die Ähnlichkeitsprüfung zur Erkennung einer räumlichen Überlappung mehrerer lokaler Häufungen verläuft also analog zu der im Zusammenhang der Figur 6 beschriebenen Ähnlichkeitsprüfung zur Ermittlung der Ähnlichkeitsvektoren 601, mit dem Unterschied, dass sie nur Ähnlichkeitsvektoren 601 des zweiten Clusters 701b gemäß der vom Anwender getroffenen Auswahl einbezieht, und wobei die Häufungsreferenzsituation die Rolle der Referenzsituation übernimmt.

In der Figur 8 ist beispielhaft dargestellt, dass drei von dem zweiten Cluster 701b umfasste Ähnlichkeitsvektoren 601 keine hinreichende quantitative Ähnlichkeit zu der in der Figur 5 dargestellten Situation aufweisen, sondern eine eigene lokale Häufung zueinander ähnlicher relevanter Situationen mit einem anderen qualitativen Verlauf ausbilden. Die solcherart identifizierten lokalen Häufungen in dem zweiten Cluster 701b sind wiederum durch unterschiedliche Darstellungen der Ähnlichkeitsvektoren, als Kreise und als Kreuze, grafisch hervorgehoben.

Die grafische Benutzeroberfläche 800 umfasst Mittel, um die einer gegebenen lokalen Häufung angehörigen relevanten Situationen kollektiv auszuwählen und die ausgewählten relevanten Situationen kategorisiert in der Datenbank 801 zu speichern. Eine Situation kann in der Datenbank 801 als ein Zeitausschnitt der Sensordatenaufzeichnung 200 gespeichert werden, beispielsweise als ein Zeitausschnitt entsprechend den der jeweiligen Situation zugehörigen Zeitreihen 600. In diesem Fall ist die jeweilige Situation in Form von während der Fahrzeugfahrt aufgezeichneten Sensordaten 201 hinterlegt, die unmittelbar zur Stimulation eines Prüflings 900 verwendbar sind. Alternativ oder zusätzlich kann eine Situation in der Datenbank 801 in Form von Zeitreihen hinterlegt werden. Das können die im Rahmen des Verfahrens bereits erstellten Zeitreihen 600 sein und/oder von der Sensordatenaufzeichnung 200 umfasste quantitative Daten 203 und/oder speziell zur Speicherung in der Datenbank 801 auf Basis der Sensordatenaufzeichnung 200 erstellte Zeitreihen. Auf Basis solcherart in der Datenbank 801 gespeicherter Zeitreihen, die relevante Situationen aus der Sensordatenaufzeichnung 200 beschreiben, lassen sich die relevanten Situationen als virtuelle Szenarios nachbauen, um anhand einer Sensorsimulation und auf Basis der virtuellen Szenarios die synthetischen Sensordaten zur Stimulation des Prüflings zu erzeugen.

In der Figur 8 ist beispielhaft dargestellt, wie die relevanten Situationen des ersten Clusters 701a gesammelt in einem ersten Datenbankordner 801a hinterlegt werden, und wie die relevanten Situationen des zweiten Clusters 701b, die als ähnlich der in der Figur 5 dargestellten Situation gewertet und als Kreuze dargestellt sind, in einem zweiten Datenbankordner 801b hinterlegt werden. Die in den Datenbankordnern 802 gesammelt hinterlegten relevanten Situationen erhalten jeweils eine Kategorisierung als "Überholmanöver Typ 1" (gemäß Figur 1) bzw. als "Überholmanöver Typ 2" (gemäß Figur 5). Auf gleiche Weise können auch weitere Cluster 701 bzw. lokale Häufungen gesammelt in eigenen Datenbankordnern 802 und mit jeweils einer eigenen Kategorie versehen in der Datenbank 801 hinterlegt werden.

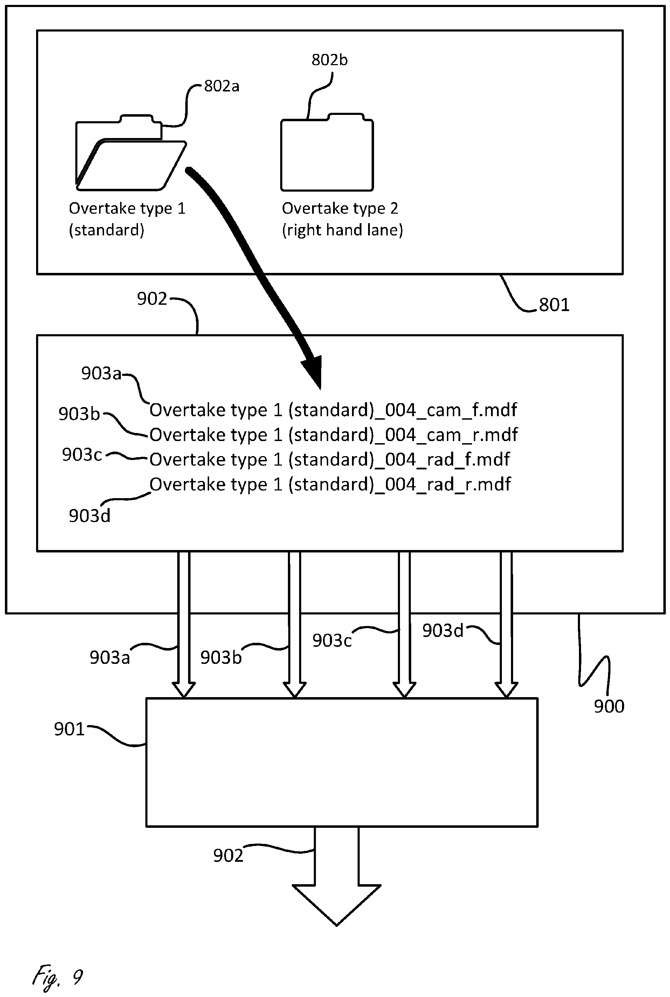

Die Abbildung der Figur 9 zeigt ein beispielhaftes Computersystem 900 zur Stimulation eines Prüflings 901 mit in der Datenbank 801 gespeicherten Sensordaten 201. Das Computersystem 900 umfasst die Datenbank 801 sowie eine Stimulationsroutine 902, die ausgestaltet ist, in der Datenbank 801 gespeicherte Sensordaten 201 auszulesen und als synthetische Sensordatenströme an einer Schnittstelle des Computersystems 900 bereitzustellen, von welcher der Prüfling 901 die Datenströme auslesen und verarbeiten kann. Beispielhaft wird der Prüfling 901 in der Abbildung mit einer Testsituation 903 aus der Sensordatenaufzeichnung 200 konfrontiert, die der Referenzsituation aus der Figur 1 ähnelt. Die Testsituation 903 ist gemeinsam mit der Referenzsituation in dem ersten Datenbankordner 802a hinterlegt und dort beispielhaft mit der laufenden Nummer 004 versehen. Die Testsituation 903 ist hinterlegt in Form von vier zeitlich übereinstimmenden Sensorrohdatenströmen aus der Sensordatenaufzeichnung 200, jeder davon hinterlegt als eine Datei des Dateiformats MDF (measurement data format). Eine erste Datei 903a ist ein Ausschnitt des ersten Bilddatenstroms 201a, eine zweite Datei 903b ein Ausschnitt des zweiten Bilddatenstroms 201b, eine dritte Datei 903c ein Ausschnitt des dritten Bilddatenstroms 201c, und eine vierte Datei 903d ein Ausschnitt des vierten Bilddatenstroms 201d. Die Stimulationsroutine 902 stellt jede der vier Dateien 903 als Sensorrohdatenstrom an der Schnittstelle bereit. Der Prüfling 901 liest die Sensorrohdatenströme 903 ein, wertet sie aus und erstellt auf Basis der Sensorrohdatenströme 903 Steuerbefehle 902 zur Ansteuerung eines Fahrzeugs. Durch Konfrontation des Prüflings 901 mit unterschiedlichen in dem ersten Datenbankordner 802a hinterlegten Situationen und durch eine Analyse der von dem Prüfling jeweils in Reaktion darauf generierten Steuerbefehle 902 ist verifizierbar, ob der Prüfling auf Überholmanöver des Typs 1 wie vorgesehen reagiert. Auf analoge Weise ist verifizierbar, ob der Prüfling 901 wie vorgesehen auf Überholmanöver des Typs 2, hinterlegt im zweiten Datenbankordner 802b, oder auf andere Manöver, hinterlegt in weiteren Datenbankordnern 802, reagiert.

## Patentansprüche

1. Computerimplementiertes Verfahren zur Stimulation eines Prüflings (901) mit synthetischen Sensordaten (903), die synthetischen Sensordaten (903) ausgestaltet zur Imitation von Sensordaten (200) eines in einem Fahrzeug (101) verbauten bildgebenden Sensors (104), die folgenden Verfahrensschritte umfassend:
Festlegung eines Satzes charakteristischer Ereignisse zur Identifikation relevanter Situationen in einer Sensordatenaufzeichnung (200) einer Fahrzeugfahrt;
Festlegung eines Satzes relevanter Variablen der Fahrzeugfahrt;
Beschreibung einer Referenzsituation anhand einer Anzahl von Referenzzeitreihen (400), von denen jede einen zeitlichen Verlauf einer relevanten Variablen aus dem Satz relevanter Variablen beschreibt;
Identifikation einer Anzahl relevanter Situationen in der Sensordatenaufzeichnung (200) durch eine Suche nach charakteristischen Ereignissen aus dem Satz charakteristischer Ereignisse in der Sensordatenaufzeichnung (200);
für jede identifizierte relevante Situation: Beschreibung der relevanten Situation durch Erstellung einer Anzahl von der relevanten Situation zugeordneten Zeitreihen (600), von denen jede einen zeitlichen Verlauf einer relevanten Variablen in der Sensordatenaufzeichnung (200) innerhalb eines in zeitlicher Nähe zu der relevanten Situation angesiedelten Zeitintervalls beschreibt, und Berechnung eines der relevanten Situation zugeordneten Ähnlichkeitsvektors (601) durch Berechnung einer quantitativen Ähnlichkeit jeder Zeitreihe (600) mit derjenigen Referenzzeitreihe (400), die den zeitlichen Verlauf derselben relevanten Variablen beschreibt wie die jeweilige Zeitreihe (600);
Identifikation einer Anzahl von Ähnlichkeitsvektoren (601) aus einem Cluster (701) von Ähnlichkeitsvektoren (601) in einem Ähnlichkeits-Koordinatensystem (700) als Häufung zueinander ähnlicher relevanter Situationen;
Auswahl einer relevanten Situation aus der Häufung zueinander ähnlicher relevanter Situationen als Testsituation; und
Erzeugung der synthetischen Sensordaten (903) auf Basis der Testsituation und Stimulation des Prüflings (901) mit den synthetischen Sensordaten (903).

2. Verfahren gemäß Anspruch 1, mit den Verfahrensschritten:
Nachbau der Testsituation als virtuelle Verkehrssituation, die virtuelle Verkehrssituation mindestens eine Sensorsimulation umfassend, die ausgestaltet ist, die synthetischen Sensordaten (903) zu erzeugen und zur Imitation von Sensordaten (201) eines bildgebenden Sensors (104) auszugestalten, der in einem sich in der virtuellen Verkehrssituation bewegenden Fahrzeug (101) verbaut ist; und
Erzeugung der synthetischen Sensordaten (903) mittels der Sensorsimulation.

3. Verfahren gemäß Anspruch 1 mit den Verfahrensschritten:
Erzeugung der synthetischen Sensordaten (903) durch Auslesung von Sensordaten (200) aus der Sensordatenaufzeichnung; und
Stimulation des Prüflings mit den ausgelesenen Sensordaten (200).

4. Verfahren gemäß einem der vorhergehenden Ansprüche, mit den Verfahrensschritten:
Auswahl einer relevanten Situation aus dem Cluster (701) von Ähnlichkeitsvektoren (601) als Häufungsreferenzsituation;
für jede weitere relevante Situation aus dem Cluster (701) von Ähnlichkeitsvektoren (601): Berechnung einer quantitativen Ähnlichkeit jeder Zeitreihe (600) der relevanten Situation mit derjenigen Zeitreihe der Häufungsreferenzsituation, die den zeitlichen Verlauf derselben relevanten Variablen beschreibt wie die jeweilige Zeitreihe (600), und Bewertung der relevanten Situation als ähnlich zur Häufungsreferenzsituation, wenn die quantitative Ähnlichkeit jeder Zeitreihe (600) der relevanten Situation hinreichend hoch ist; und
Identifikation der Häufungsreferenzsituation und aller zur Häufungsreferenzsituation ähnlichen relevanten Situationen als Häufung zueinander ähnlicher relevanter Situationen.

5. Verfahren nach einem der vorhergehenden Ansprüche mit den Verfahrensschritten:
Speicherung einer Anzahl relevanter Situationen aus der Häufung zueinander ähnlicher relevanter Situationen; und
Auswahl der Testsituation aus der Anzahl der gespeicherten relevanten Situationen;

6. Verfahren gemäß einem der vorhergehenden Ansprüche, in dem der Satz charakteristischer Ereignisse zumindest eines der nachfolgenden Ereignisse umfasst:
- ein Bremsmanöver, insbesondere ein besonders starkes oder nicht zum Streckenverlauf passendes Bremsmanöver;
- ein Lenkmanöver, insbesondere ein besonders starkes oder ein nicht zum Streckenverlauf passendes Lenkmanöver;
- ein Schaltvorgang;
- eine Erreichung einer bestimmten Fahrgeschwindigkeit, insbesondere einer nicht zum Streckenverlauf passenden Fahrgeschwindigkeit;
- ein von einem Fahrerüberwachungssystem erfasstes Fahrerverhalten;
- ein Erscheinen eines Umweltelements im Sichtfeld eines an der Sensordatenaufzeichnung beteiligten Sensors;
- eine Hinzufügung eines Objekts in einer von einem an der Sensordatenaufzeichnung beteiligten Sensor geführten Objektliste;
- ein von einem an der Sensordatenaufzeichnung beteiligten Sensor oder von einem Fahrassistenzsystem veranlasstes Steuersignal; oder
- ein zur Markierung eines Zeitpunktes der Fahrzeugfahrt als charakteristisches Ereignis manuell erzeugtes Signal.

7. Verfahren nach einem der vorhergehenden Ansprüche, mit den Verfahrensschritten:
Überwachung, während der Fahrzeugfahrt, der Fahrzeugfahrt nach charakteristischen Ereignissen;
Hinterlegung einer Markierung in der Sensordatenaufzeichnung infolge einer Erkennung eines charakteristischen Ereignisses; und
Suche nach charakteristischen Ereignissen in der Sensordatenaufzeichnung (200) mittels einer Suche nach Markierungen in der Sensordatenaufzeichnung (200).

8. Verfahren nach einem der vorhergehenden Ansprüche, mit dem Verfahrensschritt: Suche nach charakteristischen Ereignissen in der Sensordatenaufzeichnung (200) durch eine Analyse der Sensordatenaufzeichnung (200), insbesondere mittels zumindest eines für eine Objekterkennung oder eine Szeneninterpretation ausgestalteten neuronalen Netzes.

9. Verfahren gemäß Anspruch 8, in dem die Sensordatenaufzeichnung (200) eine Aufzeichnung von quantitativen Daten (203) während der Fahrzeugfahrt umfasst und die Analyse der Sensordatenaufzeichnung (200) eine Analyse der quantitativen Daten (203) umfasst.

10. System zur Stimulation eines Prüflings (901) mit synthetischen Sensordaten (903), die synthetischen Sensordaten (903) ausgestaltet zur Imitation von Sensordaten (201) eines in einem Fahrzeug (101) verbauten bildgebenden Sensors (104), das System computerimplementierte Mittel zur Durchführung eines Verfahrens gemäß einem der vorhergehenden Ansprüche umfassend.
